# EUROPÄISCHE PATENTSCHRIFT

(11) **EP 2 885 154 B1**
(45) Veröffentlichungstag und Bekanntmachung des Hinweises auf die Patenterteilung: **17.06.2020**
(21) Anmeldenummer: 13745402.1
(22) Anmeldetag: 02.08.2013
(51) Int. Cl.: B60K 37/06, G06F 3/0488

(54) **VERFAHREN UND EINE BEDIEN- UND ANZEIGEEINRICHTUNG ZUM BETREIBEN EINER INTERAKTIVEN BEDIENEINRICHTUNG**
METHOD AND AN OPERATOR CONTROL AND DISPLAY DEVICE FOR OPERATING AN INTERACTIVE OPERATOR CONTROL DEVICE
PROCÉDÉ ET DISPOSITIF DE COMMANDE ET D'AFFICHAGE POUR LE FONCTIONNEMENT D'UN DISPOSITIF DE COMMANDE INTERACTIF

(30) Priorität: 16.08.2012 DE 102012016289; 18.01.2013 DE 102013000817
(43) Veröffentlichungstag der Anmeldung: 24.06.2015
(73) Patentinhaber: Volkswagen Aktiengesellschaft, 38440 Wolfsburg (DE)
(72) Erfinder: WENGELNIK, Heino, 38442 Wolfsburg (DE); WILD, Holger, 10179 Berlin (DE); KÖTTER, Nils, 38126 Braunschweig (DE)
(86) Internationale Anmeldenummer: PCT/EP2013/066269
(87) Internationale Veröffentlichungsnummer: WO 2014/026862

(56) Entgegenhaltungen:
- DE-A1-102006 037 156

## Beschreibung

Die vorliegende Erfindung betrifft ein Verfahren zum Betreiben einer interaktiven Bedieneinrichtung und eine Bedien- und Anzeigeeinrichtung, insbesondere in einem Kraftfahrzeug.

In modernen Kraftfahrzeugen werden interaktive Bedieneinrichtungen eingesetzt, um den Fahrzeuginsassen Informationen zu vermitteln und die Möglichkeit zu geben, Fahrzeug- und Entertainmentfunktionen zu bedienen. Eine interaktive Bedieneinrichtung umfasst eine Anzeigeeinrichtung, auf der mindestens zwei Bedienelemente graphisch dargestellt werden. Es gibt verschiedene Arten von interaktiven Bedieneinrichtungen in Kraftfahrzeugen, solche, bei denen die Bedienung durch eine Berührung der Anzeigefläche erfolgt, auch als Touchscreens bezeichnet, und andere, bei denen die Bedienung durch separate manuelle Bedienelemente möglich. Außerdem sind Anzeige-und Bedieneinrichtungen bekannt, bei denen die Bedienung einzelner Funktionalitäten über den Touchscreen erfolgt, andere Funktion oder auch die gleichen können über manuelle Bedienelemente ausgewählt und aktiviert werden.

Außerdem sind interaktive Bedieneinrichtungen bekannt, die Sensoren aufweisen, die über die Annäherung eines Betätigungselementes, beispielsweise eines menschlichen Körperteils, aktiviert werden. Damit kann die Darstellung auf der Anzeigeeinrichtung durch eine Annäherung des Betätigungselementes, beispielsweise eines Fingers für eine nachfolgende Bedienung auf dem Touchscreen verändert werden.

Aus der WO 2007/107368 ist eine interaktive Bedienvorrichtung mit einer Anzeigevorrichtung und ein verfahren zum Betreiben einer interaktiven Bedienvorrichtung mit folgende Schritte bekannt:
- Anzeigen von graphischen Informationen auf der Anzeigevorrichtung;
- Empfangen von Sensorinformationen;
- Aktivieren einer Bedienaktion, wenn anhand der Sensorinformationen ermittelt wird, dass ein Köperteil eines Nutzers sich innerhalb eines Aktivierungsbereichs befindet, der räumlich relativ zu dem Darstellungsgebiet eines Bedienelementes auf der Anzeigevorrichtung festgelegt ist, dem Bedienaktion zugeordnet ist, wobei vorgesehen ist, dass die empfangenen Sensorinformationen Nutzerinformationen umfassen, die zum Übermitteln einer Bedienabsicht für das mindestens eine Bedienelement zeitlich vor einem Aktivieren der Bedienaktion ausgewertet werden; und die auf Anzeigevorrichtung dargestellten Informationen in Abhängigkeit von der ermittelten Bedienabsicht angepasst werden, so dass das mindestens eine Bedienelement optimiert für das Aktivieren der dem Bedienelement zugeordneten Bedienaktion mit dem Körperteil dargestellt wird.

Aus der DE 102009059867 A1 ist ein Verfahren zum Bereitstellen einer graphischen Benutzerschnittstelle bekannt, bei dem zumindest eine Teilmenge der angezeigten Objekte unabhängig von den Positionen dieser Objekte auf der Anzeigefläche in einen ersten Bereich der Anzeigefläche in die Nähe der Position bei der die Geste ausgeführt wurde, verschoben wird.

Die DE102006037156 A1 beschriebt eine interaktive Bedienvorrichtung mit einer Anzeigevorrichtung und ein Verfahren zum Betreiben der interaktiven Bedienvorrichtung. Das Verfahren umfasst folgende Schritte: Anzeigen von graphischen Informationen auf der Anzeigevorrichtung; Empfangen von Sensorinformationen; Aktivieren einer Bedienaktion, wenn anhand der Sensorinformationen ermitteltet wird, dass ein Körperteil eines Nutzers sich innerhalb eines Aktivierungsbereichs befindet, der räumlich relativ zu einem Darstellungsgebiet eines Bedienelements auf der Anzeigevorrichtung festgelegt ist, dem die Bedienaktion zugeordnet ist; wobei die empfangenen Sensorinformationen Nutzerinformationen umfassen, die zum Ermitteln einer Bedienabsicht für das mindestens eine Bedienelement zeitlich vor einem Aktivieren der Bedienaktion ausgewertet werden; und die auf der Anzeigevorrichtung dargestellten Informationen in Abhängigkeit von der ermittelten Bedienabsicht angepasst werden, so dass das mindestens eine Bedienelement optimiert für das Aktivieren der dem Bedienelement zugeordneten Bedienaktion dargestellt wird. Die Bedienvorrichtung ist vorzugsweise als Bestandteil einer Kraftfahrzeugkonsole entsprechend ausgestaltet, um das Bedienverfahren ausführen zu können.

Weiterhin ist in der DE 102007029618 A1 ist eine Anzeige- und Bedienvorrichtung eines Kraftfahrzeugs beschrieben, die in einem ersten Modus oder in einem zweiten, aktivierten Modus betreibbar ist, umfassend eine Anzeigevorrichtung zum Anzeigen von Informationen auf eine Anzeigefläche und einer positionsempfindlichen Sensoreinheit zum Ermitteln einer Position eines Betätigungselements relativ zu der Anzeigefläche, wobei der zweite Modus in Abhängigkeit von der Position des Betätigungselements relativ zu der Anzeigefläche oder dem interaktiven Bedienelement aktivierbar ist.

Es ist die Aufgabe der vorliegenden Erfindung, ein Verfahren zum Betreiben einer interaktiven Bedieneinrichtung der eingangserwähnten Art zu schaffen, die eine einfache und intuitive Aktivierung mindestens eines Bedienelements auf der Anzeigeeinrichtung erlaubt.

Die Aufgabe wird erfindungsgemäß durch ein Verfahren mit den Merkmalen des Patentanspruch 1 und eine Bedien- und Anzeigeeinrichtung mit den Merkmalen von Patentanspruch 6 gelöst. Vorteilhafte Aus- und Weiterbildungen ergeben sich aus den abhängigen Ansprüchen.

Bei Annäherung des Betätigungselementes wird erfindungsgemäß das mindestens eine Bedienelement auf der Bedien-und Anzeigeeinrichtung in den Greifbereich des Nutzers, beispielsweise dem Fahrer oder Beifahrer in einem Kraftfahrzeug verschoben. Die Bedienung durch den Fahrer oder Beifahrer wird mit Hilfe einer entsprechenden Sensorik unterschieden, beispielweise durch eine Kamera oder einen kapazitiven Sensor, die mit der Verarbeitungseinrichtung der Bedien- und Anzeigeeinrichtung gekoppelt sind. Die erfindungsgemäße Verschiebung und Anordnung des mindestens einen Bedienelementes auf der Anzeigeeinrichtung kann somit in Abhängigkeit der Position der bedienenden Person erfolgen.

Gemäß einer Ausführung der Erfindung wird das mindestens eine Bedienelement vertikal auf der Anzeigeeinrichtung bei Annäherung des Betätigungselements verschoben. Im angenäherten Zustand werden dann Bedienelemente so angeordnet, dass sich das mindestens eine Bedienelement im Greifbereich des Nutzers befindet. Außerdem wird das mindestens eine Bedienelement zusätzlich verkleinert. Der andere Teil des Touchscreens bleibt leer oder steht für eine Informationsanzeige zur Verfügung. Eine solche Ausführung der Erfindung kann beispielsweise dann vorteilhaft sein, wenn die Anzeigeeinrichtung relativ hoch im Fahrzeug angeordnet ist, damit der Fahrer sehr schnell Informationen auf der Anzeigeeinrichtung erfassen kann, aber die Anordnung der Bedien- und Anzeigeeinrichtung für die Bedienung ergonomisch nicht optimal ist.

In einer weiteren Ausführungsform der Erfindung werden die Bedienelemente bei Annäherung des Betätigungselementes horizontal auf der Anzeigeeinrichtung verschoben. Beispielsweise ist das mindestens eine Bedienelemente im angenäherten Zustand zur Mitte der Anzeigeeinrichtung verschoben und außerdem verkleinert dargestellt. Die restlichen Bereiche des Touchscreens bleiben leer oder stehen für eine Informationswiedergabe zur Verfügung.

In einer weiteren Ausführungsform der Erfindung ist das mindestens eine Bedienelement im angenäherten Zustand randseitig auf der Anzeigeeinrichtung angeordnet. Damit kann insbesondere im Falle einer Mehrbenutzerbedienung ein Bedienelement dort dargestellt werden, wo es ergonomisch greifbar wird.

Die erfindungsgemäße Bedien- und Anzeigeeinrichtung ist insbesondere ausgebildet, das vorstehend beschriebene erfindungsgemäße Verfahren vollständig oder teilweise auszuführen. Die Merkmale der erfindungsgemäßen Bedien- und Anzeigeeinrichtung weisen dieselben Vorteile wie die entsprechenden Merkmale des erfindungsgemäßen Verfahrens auf.

Nachfolgend wird die Erfindung anhand bevorzugter Ausführungsbeispiele unter Bezugnahme auf die folgenden Figuren näher erläutert. Hierbei zeigen:
- Fig. 1: ein schematisches Ausführungsbeispiel einer erfindungsgemäßen Bedien- und Anzeigeeinrichtung;
- Fig. 2: eine schematische Darstellung von auf der Anzeigeeinrichtung horizontal verschobenen Bedienelementen;
- Fig. 3: eine schematische Darstellung von auf der Anzeigeeinrichtung vertikal verschobenen Bedienelementen;
- Fig. 4: eine schematische Darstellung von auf der Anzeigeeinrichtung vertikal verschobenen Bedienelementen.
- Fig. 5: eine schematische Darstellung von Bedienelementen, die randseitig auf dem Touchscreen angeordnet sind.

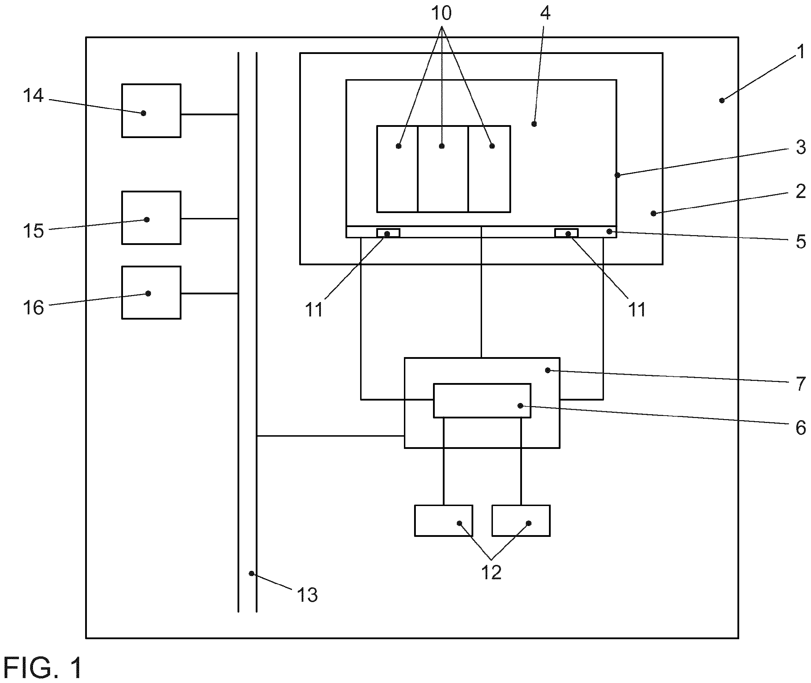

In **Fig. 1** ist eine Bedien- 2 und Anzeigeeinrichtung 3 für ein Kraftfahrzeug dargestellt. Die Bedien- 2 und Anzeigeeinrichtung 3 weist eine Anzeigefläche 4 auf. Die Anzeigefläche 4 ist als Touchscreen ausgeführt. Auf der Anzeigefläche 4 sind die Bedienelemente 10 dargestellt. Unterhalb der Anzeigefläche 4 ist eine annäherungsempfindliche Sensoreinheit 5 gezeigt, mit der ein Betätigungselement, beispielweise ein Finger 8 vor der Anzeigefläche 4 im Raum erfasst werden kann. Die Sensoreinheit 5 kann unterschiedliche Verfahren zum Detektieren eines Betätigungselements verwenden. Im Ausführungsbeispiel weist die Sensoreinheit 5 eine Reflektionslichtschranke 11 auf, die verschieden modulierte elektromagnetische Detektionsstrahlung in einzelnen Bereichen vor der Anzeigefläche 4 emittiert. Die empfangene, reflektierte und/oder gestreute Detektionsstrahlung kann hinsichtlich ihrer Modulation in der Analyseeinrichtung 6 analysiert werden, um zu ermitteln, in welchem Bereich die Detektionsstrahlung an einem Betätigungselement, typischerweise der Hand 8 eines Benutzers, gestreut oder reflektiert wurde. Befinden sich mehrere Nutzer in der Reichweite der interaktive Bedien- 2 und Anzeigeeinrichtung 3 in einem Fahrzeug 1, beispielweise der Fahrer und der Beifahrer des Fahrzeugs, können diese anhand unterschiedlicher Signale unterschieden werden, die über unterschiedliche Signalgeber 12, welche beispielweise in einem Fahrersitz und einem Beifahrersitz integriert sind, in den Körper des Nutzers eingekoppelt werden. Die Signalgeber 12 werden in der Analyseeinrichtung 6 analysiert.

Die Analyseeinrichtung 6 ist im vorliegenden Ausführungsbeispiel in eine Verarbeitungseinrichtung 7 integriert, die ihrerseits mit der Anzeigefläche 4 verbunden ist. In der Verarbeitungseinrichtung 7 wird jeder in der Analyseeinrichtung 6 erfassten Bewegung und/oder Signal ein Steuerbefehl zugeordnet, mit dem die Darstellung von Bedienelementen 10 auf der Anzeigefläche 4 gesteuert wird.

Die Anzeigefläche 4 ist über die Verarbeitungseinrichtung 7 mit dem Datenbus 13 verbunden, an den mehrere durch die graphische Benutzerschnittstelle zu bedienende Systeme, beispielweise eine in einem Fahrzeug 1 integrierte Infotainmenteinrichtung 14, ein Navigationssystem 15 oder eine Klimaanlage 16 angeschlossen sind. Diese Systeme liefern Daten an die Verarbeitungseinrichtung 7 zum Darstellen von anwendungsspezifischen Bedienelementen 10 die als Bedienflächen oder Anzeigeinhalte auf der Anzeigefläche 4 darstellbar sind.

Im Folgenden wird das Verfahren zum Betreiben einer interaktiven Bedieneinrichtung und Anzeigeeinrichtung näher erläutert.

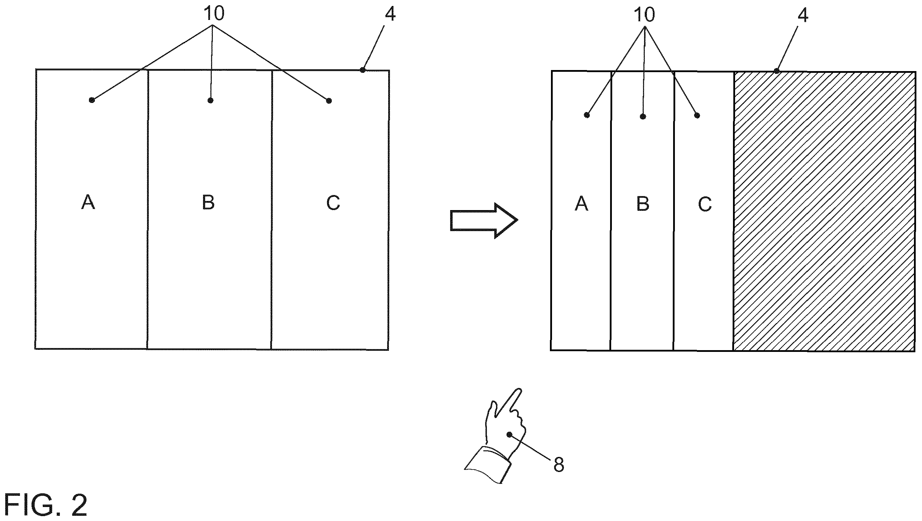

In **Fig. 2** ist eine Darstellung des Bedienelementes 10 gezeigt, die bei Annäherung eines Betätigungselementes 8 horizontal auf der Anzeigefläche 4 verschoben werden. In einem abgenäherten Zustand nehmen die Bedienelemente 10 die Anzeigefläche 4 vollständig ein. Die Buchstaben A, B, C, stehen symbolisch für Touch-bedienbare Flächen. In einem angenäherten Zustand werden die Bedienelemente so angeordnet dass die Bedienelemente 10 an einer Seite der Anzeigefläche 4 in Greifbereich der Nutzer verschoben und verkleinert dargestellt sind. Die andere Seite der Anzeigefläche 4 bleibt leer. In diese Position kann der Nutzer, beispielsweise der Fahrer, die Bedienelemente 10 ergonomisch und intuitive ohne größere Bewegung seines Oberkörpers bedienen.

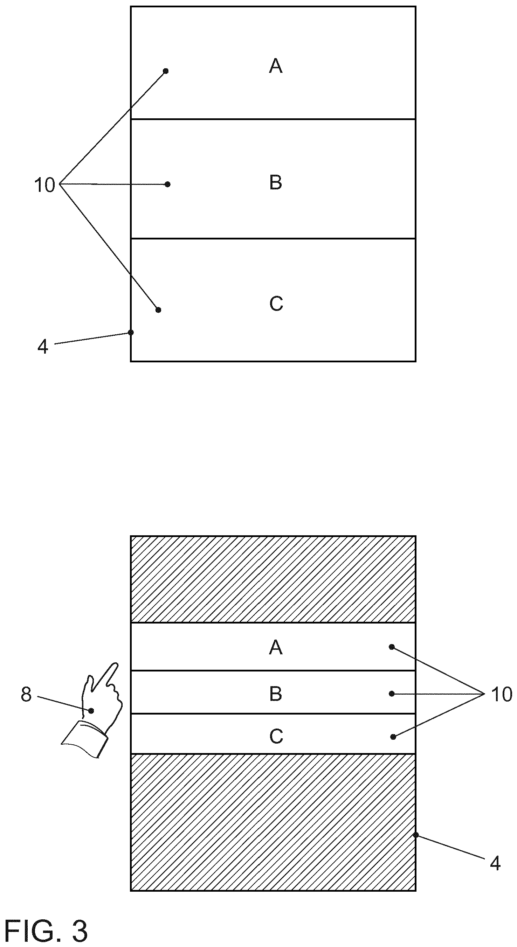

**Fig. 3** zeigt eine Darstellung der Bedienelemente 10, die bei Annäherung eines Betätigungselementes 8 vertikal auf der Anzeigefläche 4 verschoben werden. In einen abgenäherten Zustand sind die Bedienelemente 10 vollständig auf der Anzeigefläche 4 dargestellt. Im angenäherten Zustand werden die horizontalen Bedienelemente 10 zur Mitte der Anzeigefläche 4 verschoben und verkleinert. Die oberen und unteren Bereiche der Anzeigefläche 4 bleiben leer oder dienen zur Wiedergabe von Informationen.

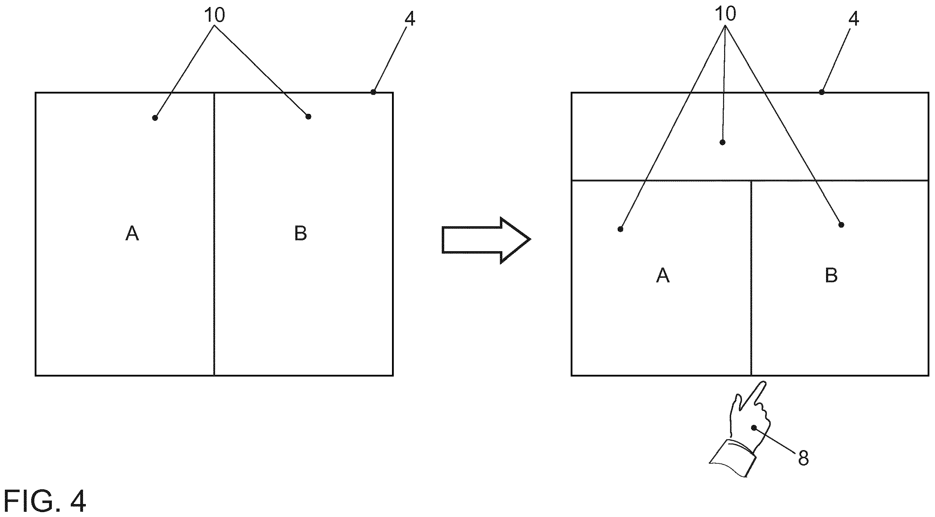

**Fig. 4** zeigt eine weitere Darstellung der Bedienelemente 10, die bei Annäherung eines Betätigungselementes vertikal auf der Anzeigefläche 4 verschoben werden. In einen abgenäherten Zustand nehmen die Bedienelemente 10 wiederum die vollständige Anzeigefläche 4 ein. In einen angenäherten Zustand wird ein zusätzliches Bedienelement 10 über den bereits im abgenäherten Zustand dargestellten Bedienelementen 10 eingefügt.

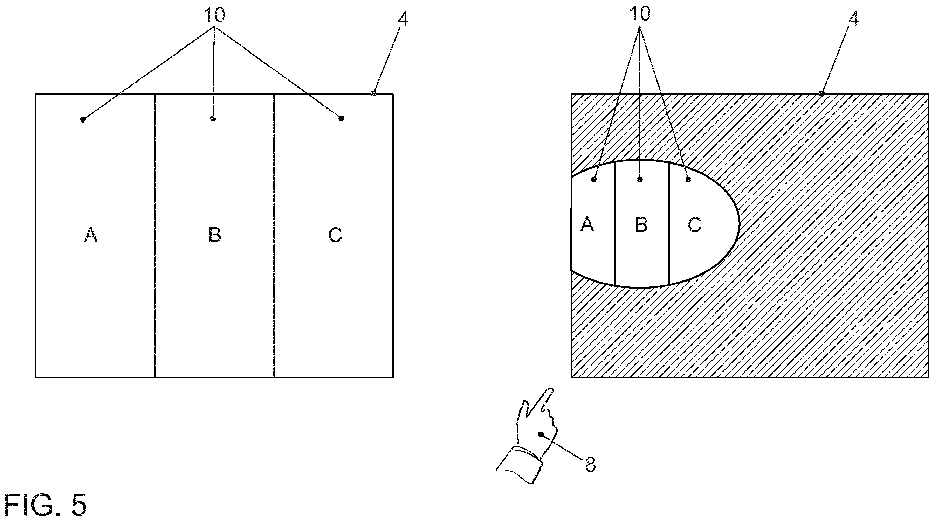

**Fig. 5** zeigt eine Darstellung von Bedienelementes 10 die nach Annäherung eines Betätigungselementes randseitig auf dem Anzeigefläche 4 angeordnet sind. In einen abgenäherten Zustand sind die Bedienelemente 10 vollständig und vertikal auf der Anzeigefläche 4 dargestellt. Im angenäherten Zustand sind die vertikalen Bedienelemente 10 so angeordnet dass die Bedienelemente 10 randseitig in den Greifbereich des Nutzers verschoben und verkleinert werden.

### Bezugszeichenliste

- 1: Fahrzeug
- 2: Bedieneinrichtung
- 3: Anzeigeeinrichtung
- 4: Anzeigefläche
- 5: Sensoreinheit
- 6: Analyseeinrichtung
- 7: Verarbeitungseinrichtung
- 8: Hand
- 10: Bedienelementen
- 11: Reflektionslichtschranke
- 12: Signalgeber
- 13: Datenbus
- 14: Infotainmenteinrichtung
- 15: Navigationssystem
- 16: Klimaanlage

## Patentansprüche

1. Verfahren zum Betreiben einer Interaktiven Bedieneinrichtung (2), insbesondere in einem Kraftfahrzeug (1), mit einer Anzeigeeinrichtung (3) und auf der Anzeigefläche (4) dargestellten und/oder darstellbaren Informationen, die mindestens ein Bedienelemente (10) beinhalten, umfassend folgende Schritte:
a. Erfassen einer Annäherung eines Betätigungselements eines Nutzers als Nutzereingabe,
b. Ermitteln einer Bedienabsicht für das mindestens eine Bedienelemente (10) der auf der Anzeigefläche (4) dargestellte Bedienelement (10),
c. Anpassen der auf der Anzeigefläche (4) dargestellten Informationen in Abhängigkeit der ermittelten Bedienabsicht, so dass das mindestens eine Bedienelement (10) optimiert für das Aktivieren des mindestens einen Bedienelements (10) dargestellt wird,
wobei bei einem Ermitteln einer Bedienabsicht die örtliche Lage des mindestens einen Bedienelementes (10) verändert wird, indem bei einer Annäherung eines Betätigungselements, das mindestens eine Bedienelement (10) in den einen Greifbereich des Nutzers verschoben wird,
**dadurch gekennzeichnet, dass**
das mindestens eine Bedienelement (10) verkleinert wird.

2. Verfahren nach Anspruch 1, **dadurch gekennzeichnet, dass**, das mindestens eine Bedienelement (10) horizontal auf der Anzeigefläche (4) verschoben wird.

3. Verfahren nach einen der Ansprüche 1 bis 2, **dadurch gekennzeichnet, dass**, das mindestens eine Bedienelement (10) vertikal auf der Anzeigefläche (4) verschoben wird.

4. Verfahren nach einem der Ansprüche 1 bis 3, **dadurch gekennzeichnet, dass**, das mindestens eine Bedienelement (10) mittig auf der Anzeigefläche (4) dargestellt wird.

5. Verfahren nach einem der Ansprüche 1 bis 3, **dadurch gekennzeichnet, dass**, das mindestens eine Bedienelement (10) randseitig angeordnet wird.

6. Bedien- (2) und Anzeigeeinrichtung (3), insbesondere in einem Kraftfahrzeug (1), mit einer Anzeigefläche (4) und auf der Anzeigefläche (4) dargestellten und/oder darstellbaren Informationen, die Bedienelement (10) beinhalten, umfassend folgende Merkmale:
a. Eine Verarbeitungseinrichtung (7) zur Steuerung der Bedien- (2) und Anzeigeeinrichtung (3).
b. eine berührungslos messende Erfassungseinrichtung, die eine Annäherung eines Betätigungselements des Nutzers als Nutzereingabe ermittelt,
wobei die Verarbeitungseinrichtung (7) derart ausgebildet ist, dass beim Ermitteln einer Bedienabsicht des Nutzers die auf der Anzeigefläche (4) dargestellten Informationen derart angepasst werden, dass das mindestens eine Bedienelement (10) in seiner örtlichen Lage auf der Anzeigefläche (4) verändert wird, wobei die Verarbeitungseinrichtung (7) so ausgebildet ist, dass bei einer Annäherung des Betätigungselementes das mindestens eine Bedienelement (10) in einen Greifbereich des Nutzers verschoben wird,
**dadurch gekennzeichnet, dass**
die Verarbeitungseinrichtung (7) so ausgebildet ist, dass das mindestens eine Bedienelement (10) verkleinert wird.

7. Bedien- (2) und Anzeigeeinrichtung (3) nach Anspruch 6, **dadurch gekennzeichnet, dass**, die Verarbeitungseinrichtung (7) so ausgebildet ist, dass das mindestens ein Bedienelement (10) horizontal auf der Anzeigefläche (4) verschoben wird.

8. Bedien- (2) und Anzeigeeinrichtung (3) nach einem der Ansprüche 6 oder 7, **dadurch gekennzeichnet, dass**, die Verarbeitungseinrichtung (7) so ausgebildet ist, dass das mindestens ein Bedienelement (10) vertikal auf der Anzeigefläche (4) verschoben wird.

9. Bedien- (2) und Anzeigeeinrichtung (3) nach einem der Ansprüche 6 bis 8, **dadurch gekennzeichnet, dass**, die Verarbeitungseinrichtung (7) so ausgebildet ist, dass das mindestens ein Bedienelement (10) mittig auf der Anzeigefläche (4) dargestellt wird.

10. Bedien- (2) und Anzeigeeinrichtung (3) nach einem der Ansprüche 6 bis 8 **dadurch gekennzeichnet, dass**, die Verarbeitungseinrichtung (7) so ausgebildet ist dass, mindestens ein Bedienelement (10) randseitig angeordnet wird.

## Claims

1. Method for operating an interactive operator control device (2), in particular in a motor vehicle (1), having a display device (3) and information that can be displayed and/or is displayed on the display surface (4) and contains at least one operating element (10), comprising the following steps:
a. detecting an approach of an actuating element of a user as a user input,
b. determining an operating intention for the at least one operating element (10) of the operating element (10) shown on the display surface (4),
c. adapting the information displayed on the display surface (4) as a function of the determined operating intention so that the at least one operating element (10) is represented in an optimized manner for the activation of the at least one operating element (10),
wherein, when an operating intention is determined, the local position of the at least one operating element (10) is changed in that, when the actuating element approaches, the at least one operating element (10) is displaced into the one reach area of the user,
**characterized in that**
the at least one operating element (10) is reduced in size.

2. Method according to Claim 1, **characterized in that** the at least one operating element (10) is displaced horizontally on the display surface (4).

3. Method according to any one of Claims 1 to 2, **characterized in that** the at least one operating element (10) is displaced vertically on the display surface (4).

4. Method according to any one of Claims 1 to 3, **characterized in that** the at least one operating element (10) is represented centrally on the display surface (4).

5. Method according to any one of Claims 1 to 3, **characterized in that** the at least one operating element (10) is arranged on an edge side.

6. Operator control (2) and display device (3), especially in a motor vehicle (1), having a display surface (4) and information that can be displayed and/or is displayed on the display surface (4) and contains operating element (10), comprising the following features:
a. a processing device (7) for controlling the operator control (2) and display device (3).
b. a detection device which measures without contact and detects an approach of an actuating element of the user as a user input,
wherein the processing device (7) is designed in such a way that, when an operating intention of the user is determined, the information displayed on the display surface (4) is adapted in such a way that the at least one operating element (10) is changed in its local position on the display surface (4), wherein the processing device (7) is designed such that the at least one operating element (10) is displaced into a reach area of the user when the actuating element approaches,
**characterized in that**
the processing device (7) is designed in such a way that the at least one operating element (10) is reduced in size.

7. Operator control (2) and display device (3) according to Claim 6, **characterized in that** the processing device (7) is designed such that the at least one operating element (10) is displaced horizontally on the display surface (4).

8. Operator control (2) and display device (3) according to any one of Claims 6 or 7, **characterized in that** the processing device (7) is designed such that the at least one operating element (10) is displaced vertically on the display surface (4).

9. Operator control (2) and display device (3) according to any one of Claims 6 to 8, **characterized in that** the processing device (7) is designed such that the at least one operating element (10) is represented centrally on the display surface (4).

10. Operator control (2) and display device (3) according to any one of Claims 6 to 8, **characterized in that** the processing device (7) is designed in such a way that at least one operating element (10) is arranged on an edge side.

## Revendications

1. Procédé de fonctionnement d'un dispositif d'utilisation (2) interactif, en particulier dans un véhicule automobile (1), comprenant un dispositif d'affichage (3) et des informations représentées et/ou pouvant être représentées sur la surface d'affichage (4), lesquelles comportent au moins un élément d'utilisation (10), comprenant les étapes suivantes :
a. détection de l'approche d'un élément d'actionnement d'un utilisateur comme entrée d'utilisateur,
b. détermination d'une intention d'utilisation pour ledit au moins un élément d'utilisation (10) de l'élément d'utilisation (10) représenté sur la surface d'affichage (4),
c. adaptation des informations représentées sur la surface d'affichage (4) en fonction de l'intention d'utilisation déterminée, de telle façon que ledit au moins un élément d'utilisation (10) est représenté de manière optimisée pour l'activation dudit au moins un élément d'utilisation (10),
l'emplacement dudit au moins un élément d'utilisation (10) étant modifié lors de la détermination d'une intention d'utilisation, en ce que ledit au moins un élément d'utilisation (10) est déplacé dans ladite une zone de saisie de l'utilisateur lors d'une approche d'un élément d'actionnement,
**caractérisé en ce que**
ledit au moins un élément d'utilisation (10) est réduit en taille.

2. Procédé selon la revendication 1, **caractérisé en ce que** ledit au moins un élément d'utilisation (10) est déplacé horizontalement sur la surface d'affichage (4).

3. Procédé selon l'une quelconque des revendications 1 à 2, **caractérisé en ce que** ledit au moins un élément d'utilisation (10) est déplacé verticalement sur la surface d'affichage (4).

4. Procédé selon l'une quelconque des revendications 1 à 3, **caractérisé en ce que** ledit au moins un élément d'utilisation (10) est représenté au centre de la surface d'affichage (4).

5. Procédé selon l'une quelconque des revendications 1 à 3, **caractérisé en ce que** ledit au moins un élément d'utilisation (10) est disposé sur le bord.

6. Dispositif d'utilisation (2) et d'affichage (3), en particulier dans un véhicule automobile (1), présentant une surface d'affichage (4) et des informations représentées et/ou pouvant être représentées sur la surface d'affichage (4), lesquelles comportent élément d'utilisation (10), comprenant les caractéristiques suivantes :
a. un dispositif de traitement (7) pour la commande du dispositif d'utilisation (2) et d'affichage (3),
b. un dispositif de détection mesurant sans contact, qui détermine une approche d'un élément d'actionnement de l'utilisateur comme entrée d'utilisateur,
le dispositif de traitement (7) étant conçu de telle façon que, lors de la détermination d'une intention d'utilisation de l'utilisateur, les informations représentées sur la surface d'affichage (4) sont adaptées de telle façon que ledit au moins un élément d'utilisation (10) est modifié quant à son emplacement sur la surface d'affichage (4), le dispositif de traitement (7) étant conçu de telle façon que, lors d'une approche de l'élément d'actionnement, ledit au moins un élément d'utilisation (10) est déplacé dans une zone de saisie de l'utilisateur,
**caractérisé en ce que**
le dispositif de traitement (7) est conçu de telle façon que ledit au moins un élément d'utilisation (10) est réduit en taille.

7. Dispositif d'utilisation (2) et d'affichage (3) selon la revendication 6, **caractérisé en ce que** le dispositif de traitement (7) est conçu de telle façon que ledit au moins un élément d'utilisation (10) est déplacé horizontalement sur la surface d'affichage (4).

8. Dispositif d'utilisation (2) et d'affichage (3) selon l'une quelconque des revendications 6 ou 7, **caractérisé en ce que** le dispositif de traitement (7) est conçu de telle façon que ledit au moins un élément d'utilisation (10) est déplacé verticalement sur la surface d'affichage (4).

9. Dispositif d'utilisation (2) et d'affichage (3) selon l'une quelconque des revendications 6 à 8, **caractérisé en ce que** le dispositif de traitement (7) est conçu de telle façon que ledit au moins un élément d'utilisation (10) est représenté au centre de la surface d'affichage (4).

10. Dispositif d'utilisation (2) et d'affichage (3) selon l'une quelconque des revendications 6 à 8, **caractérisé en ce que** le dispositif de traitement (7) est conçu de telle façon que ledit au moins un élément d'utilisation (10) est disposé sur le bord.
